# EUROPEAN PATENT SPECIFICATION

(11) **EP 2 604 852 B1**
(45) Date of publication and mention of the grant of the patent: **21.03.2018**
(21) Application number: 12170924.0
(22) Date of filing: 06.06.2012
(51) Int. Cl.: F03D 3/04, F03D 7/06

(54) **Apparatus for generating electric power from wind energy**
Vorrichtung zur Erzeugung von Strom aus Windenergie
Appareil pour générer une puissance électrique de l'énergie éolienne

(30) Priority: 16.12.2011 TW 100146849
(43) Date of publication of application: 19.06.2013
(73) Proprietor: LIN, Pi-Hsia, Kaohsiung City 842 (TW)
(72) Inventor: Chung, Chun-Neng, 912 Pingtung County (TW)
(74) Representative: Lang, Christian

(56) References cited:
- WO-A1-2008/074214
- WO-A1-2010/078656
- CA-A1- 2 647 833
- KR-A- 20100 011 037
- US-A1- 2007 269 312
- US-A1- 2010 254 799

## Description

The invention relates to an energy converting apparatus, more particularly to an apparatus capable of converting wind energy into electric power.

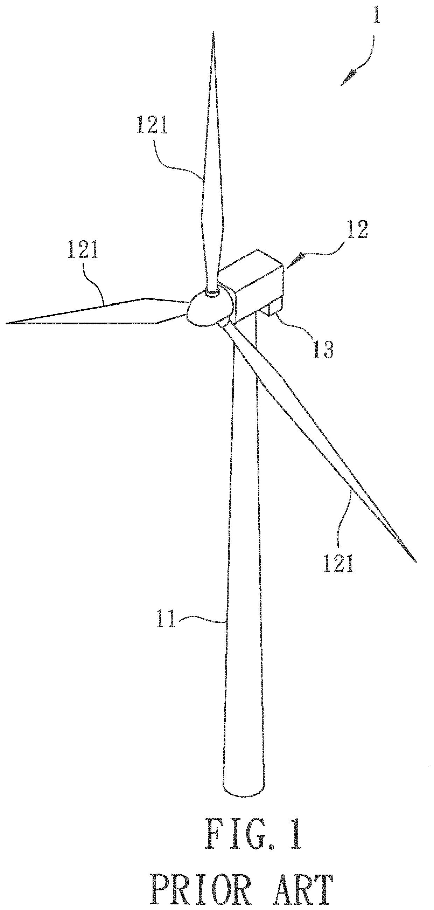

Due to the rise in environmental consciousness, economizing on power consumption has become an important issue. Referring to FIG. 1, a conventional apparatus 1 for generating electric power from wind energy is shown to include an upright prop 11, a windmill 12, and a generator 13. The windmill 12 is mounted at one end of the upright prop 11, and includes a plurality of blades 121 driven by wind to rotate. The windmill 12 converts the wind energy into rotational kinetic energy. The generator 13 is coupled to the windmill 12 to convert the rotational kinetic energy into electric power.

However, such an apparatus 1 has a huge volume that occupies a relatively wide area. It is typically built in a place remote from a city, and thus, energy loss during transmission and building cost of the conventional apparatus 1 are increased. Further, since wind power is unstable, it is difficult to drive the blades 121 to rotate stably such that generating efficiency of the conventional apparatus is unstable.

Referring to FIG. 2, Taiwanese Patent Publication No. M338278 discloses another conventional apparatus 2 for generating electric power from wind energy. The apparatus 2 comprises a wind-collecting unit 21, a blade unit 22, and a generator 23. The blade unit 22 includes an upright shaft 221 mounted on a base, and a plurality of blades 222 connected fixedly to and co-rotatable with the upright shaft 221.

The wind-collecting unit 21 includes a plurality of upright plates 211 that are fixed on the base and that are angularly equidistant and disposed around the blade unit 22. Any adjacent two of the upright plates 211 define an inwardly converging wind-guiding channel therebetween. The upright plates 211 are shaped so that wind is collected from different directions to flow directly toward the blades 222 of the blade unit 22 via the wind-guiding channels so as to rotate the blades 222 together with the upright shaft 221 to generate rotational kinetic energy. The generator 23 is coupled to the upright shaft 221 to convert the rotational kinetic energy into electric power.

Although the above-mentioned apparatus 2 can provide an effective way of generating electric power from wind energy, the blade unit 22 and the generator 23 may be damaged when tornado or typhoon occurs, since the wind-collecting unit 21 collects wind to flow toward the blade unit 22. Consequently, the service life of the conventional apparatus 2 is relatively short. US2010/0254799A and WO2010/078656 disclose an apparatus for generating electric power from wind energy comprising: a base; a blade unit as rotor mounted rotatably on said base, and at least one blade member that has a plurality of blades connected fixedly around said upright shaft and driven by wind to rotate about the pivot axis for converting wind energy into rotational kinetic energy; and a wind-collecting unit including a plurality of wind-collecting plates that are mounted pivotally on said base and that are disposed around said blades of said blade member with angular equidistance in order to be operated in case of tornado.

KR1010-0011037A discloses an apparatus for generating electric power from wind energy comprising: a base; a blade unit as rotor mounted rotatably on said base, and at least one blade member that has a plurality of blades connected fixedly around said upright shaft and driven by wind to rotate about the pivot axis for converting wind energy into rotational kinetic energy; and a wind-collecting unit including a plurality of wind-collecting plates that are mounted pivotally on said base and that are disposed around said blades of said blade member with angular equidistance in order to be operated in case of tornado. Each wind-collecting plate comprises of a plurality of guiding-segments being pivotable connected.

Therefore, the object of the present invention is to provide an apparatus capable of controlling an amount of wind flowing toward a blade unit.

This object is achieved by an apparatus comprising the features of the independent claim 1. Advantageous embodiments are subject-matter of the dependent claims.

Other features and advantages of the present invention will become apparent in the following detailed description of the preferred embodiments with reference to the accompanying drawings, of which:
FIG. 1 is a perspective view of a conventional apparatus for generating electric power from wind energy;

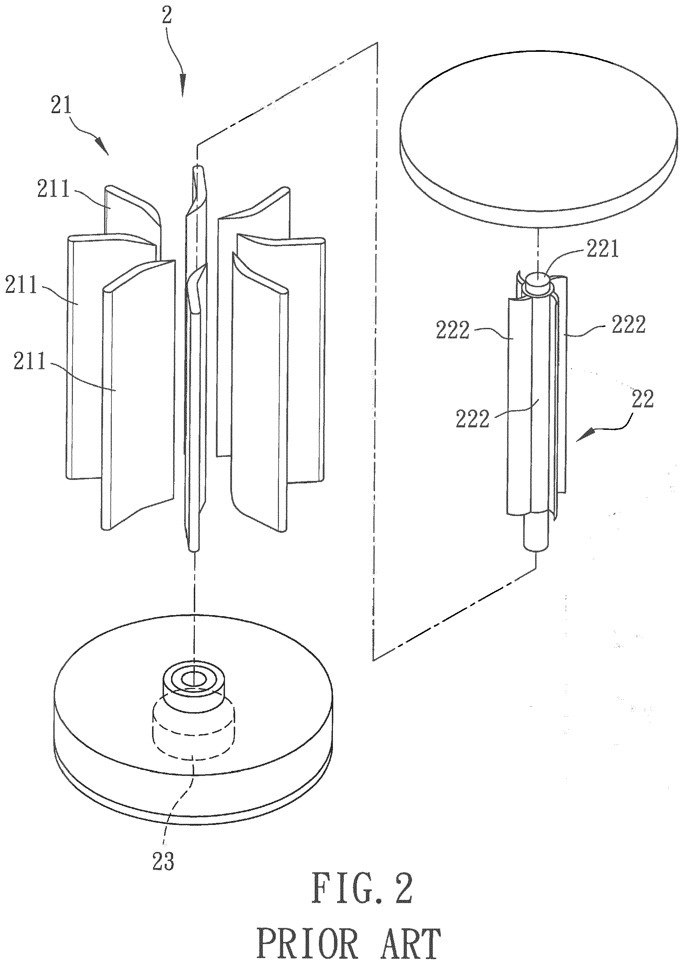

FIG. 2 is an exploded perspective view of another conventional apparatus for generating electric power from wind energy disclosed in Taiwanese Patent Publication No. M338278;
FIG. 3 is an exploded perspective view of a first preferred embodiment of an apparatus for generating electric power from wind energy according to the present invention;
FIG. 4 is a schematic sectional view of the first preferred embodiment;
FIG. 5 is a schematic top view of the first preferred embodiment for illustrating a wind-collecting unit of the apparatus at a first position, where wind is collected to flow directly toward a blade unit of the apparatus;
FIG. 6 is a schematic top view of the first preferred embodiment for illustrating the wind-collecting unit at a second position, where the amount of wind flowing toward the blade unit is reduced;
FIG. 7 is a schematic top view of the first preferred embodiment for illustrating the wind-collecting unit arranged circumferentially around the blade unit so as to prohibit wind from flowing toward the blade unit;
FIG. 8 is a partly exploded perspective view of a second preferred embodiment of an apparatus according to the present invention;
FIG. 9 is a partly exploded perspective view of a third preferred embodiment of an apparatus according to the present invention;
FIG. 10 is a schematic top view of the third preferred embodiment for illustrating second guiding segments of the wind-collecting unit at the first position;
FIG. 11 is a schematic top view illustrating the second guiding segments at the second position;
FIG. 12 is a schematic top view of the third preferred embodiment for illustrating the second guiding segments arranged circumferentially around the blade unit; and
FIG. 13 is a partly exploded perspective view of a fourth preferred embodiment of an apparatus according to the present invention.

Before the present invention is described in greater detail, it should be noted that like elements are denoted by the same reference numerals throughout the disclosure.

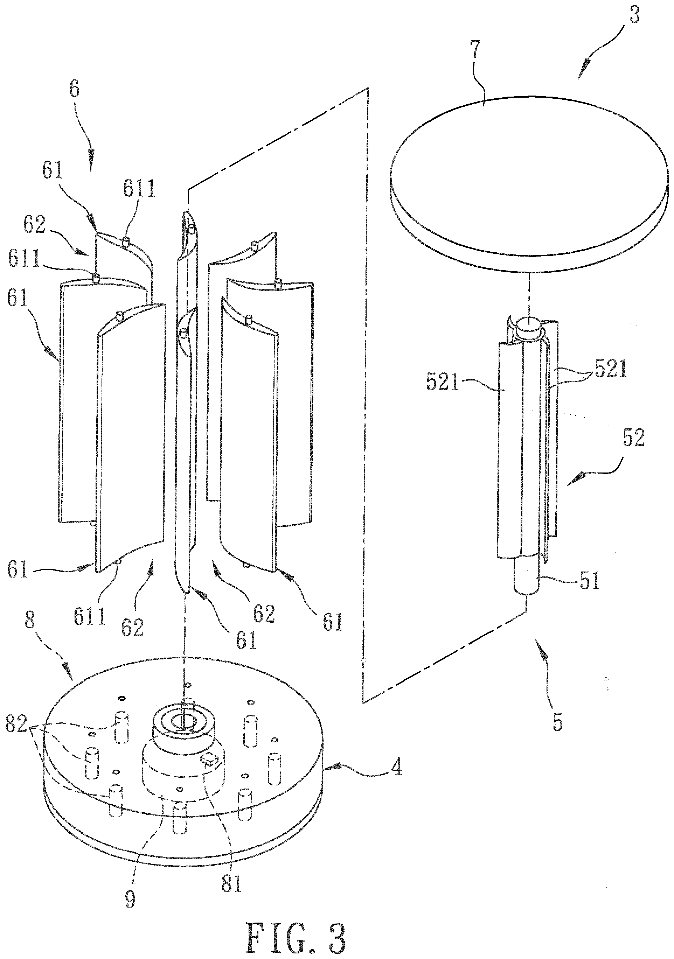

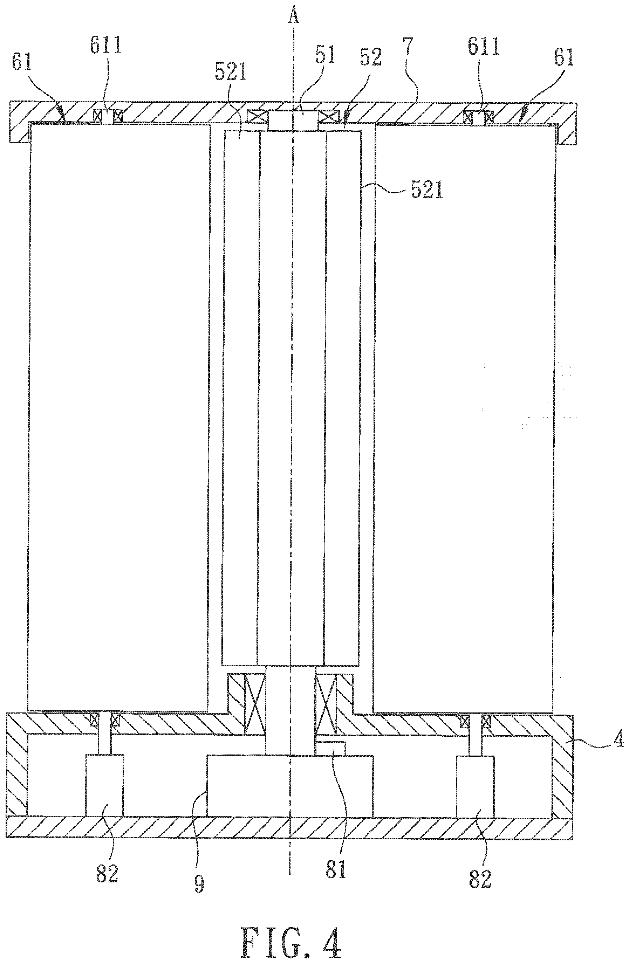

A first preferred embodiment of an apparatus 3 for generating electric power from wind energy according to the present invention is shown in FIGS. 3 and 4. The apparatus 3 comprises a hollow base 4, a blade unit 5, a generator 9, a wind-collecting unit 6, a top wall 7, and a control unit 8.

The blade unit 5 includes an upright shaft 51 that extends axially along a pivot axis (A) and that is mounted rotatably on the base 4, and a blade member 52 that includes a plurality of blades 521 connected fixedly around the upright shaft 51 and driven by wind to rotate about the pivot axis (A) for converting wind energy into rotational kinetic energy.

The generator 9 is connected to the upright shaft 51 of the blade unit 5 for converting the rotational kinetic energy into electric power.

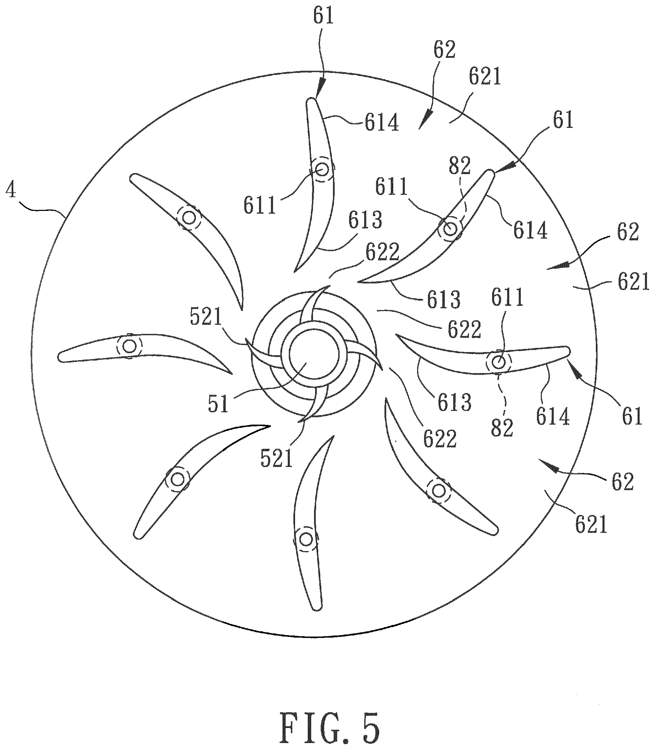

The wind-collecting unit 6 includes a plurality of wind-collecting plates 61 disposed around the blades 521 of the blade member 52 with angular equidistance. Further referring to FIG. 5, each of the wind-collecting plates 61 includes a first guiding segment 613, a second guiding segment 614 connected to the first guiding segment 613, and a driving shaft 611 extending in an axial direction parallel to the pivot axis (A) and mounting a corresponding one of the wind-collecting plates 61 pivotally to the base 4.

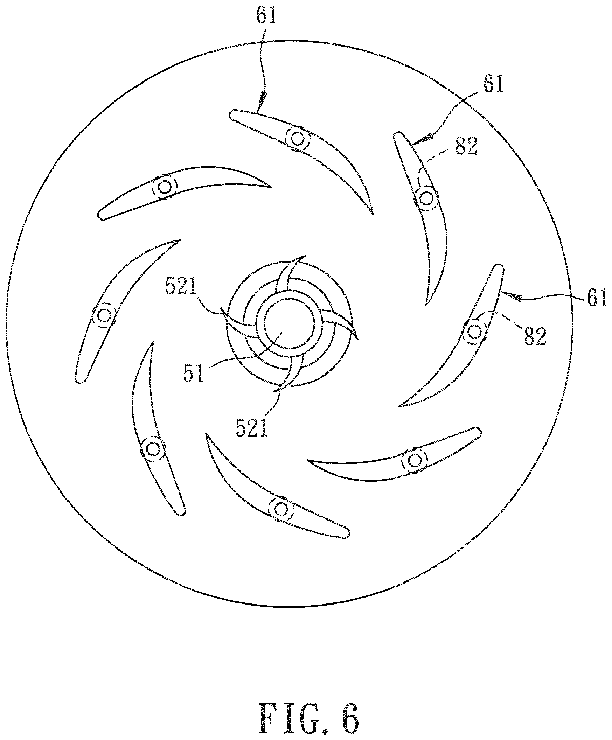

The control unit 8 includes a detector 81 and a plurality of drivers 82. The detector 81 is for detecting rotational speed of the upright shaft 51 of the blade unit 5 and for generating a control signal according to the rotational speed. Each of the drivers 82 is coupled to the detector 81 for receiving the control signal therefrom and is responsive to the control signal for driving the driving shaft 611 of a respective one of the wind-collecting plates 61 to rotate and for moving the respective one of the wind-collecting plates 61 between a first position (see FIG. 5) and a second position (see FIG. 6). At the first position, any adjacent two of the wind-collecting plates 61 define a wind guiding channel 62 therebetween having a wind inlet 621 that is defined by the second guiding segments 614 of the corresponding two wind-collecting plates 61 and a wind outlet 622 that is defined by the first guiding segments 613 of the corresponding two wind-collecting plates 61 and that faces the upright shaft 51. In particular, each of the wind guiding channels 62 converges from the wind inlet 621 thereof toward the wind outlet 622 thereof so as to collect the wind to flow directly toward the blades 521 of the blade unit 5. At the second position, each of the wind outlets 622 has a dimension (i.e., a distance between corresponding two first guiding segments 613) not smaller than a dimension (i.e., a distance between corresponding two second guiding segments 614) of a corresponding wind inlet 621 so as to reduce the amount of the wind flowing toward the blades 521.

It is noted that, in this embodiment, the first and second guiding segments 613, 614 of each wind-collecting plate 61 are formed integrally with each other, and each of the wind-collecting plates 61 is tapered from the second guiding segment 614 thereof toward the first guiding segment 613 thereof.

The top wall 7 is disposed over the upright shaft 51 and the driving shafts 611, and covers the blade unit 5 and the wind-collecting unit 6. The upright shaft 51 and the driving shafts 611 are rotatably mounted between the top wall 7 and the base 2.

As shown in FIG. 5, when the wind-collecting plates 61 move to the first position, the first guiding segments 613 are disposed adjacent to and point toward the upright shaft 51, and the second guiding segments 614 extend radially and outwardly.

By this way, wind from different directions can be collected by the wind-collecting plates 61 to flow directly toward the blades 521 of the blade unit 5 from the wind inlets 622 toward the wind outlets 622 through the wind-guiding channels 62. Consequently, the blades 521 are effectively driven by the wind to rotate about the pivot axis (A) together with the upright shaft 51 so as to convert wind energy into rotational kinetic energy. Thereafter, the generator 9 converts the rotational kinetic energy into electric power.

Referring to FIG. 6, when it is detected by the detector 81 of the control unit 8 (shown in FIGS. 3 and 4) that the rotational speed of the upright shaft 51 exceeds a predetermined threshold, the detector 81 generates the control signal to be received by the drivers 82. In response to receipt of the control signal from the detector 81, the drivers 82 move the wind-collecting plates 61 from the first position (see FIG. 5) to the second position (see FIG. 6). Accordingly, the amount of the wind flowing toward the blades 521 of the blade unit 5 can be reduced, and thus, the rotational speed of the upright shaft 51 is slowed down.

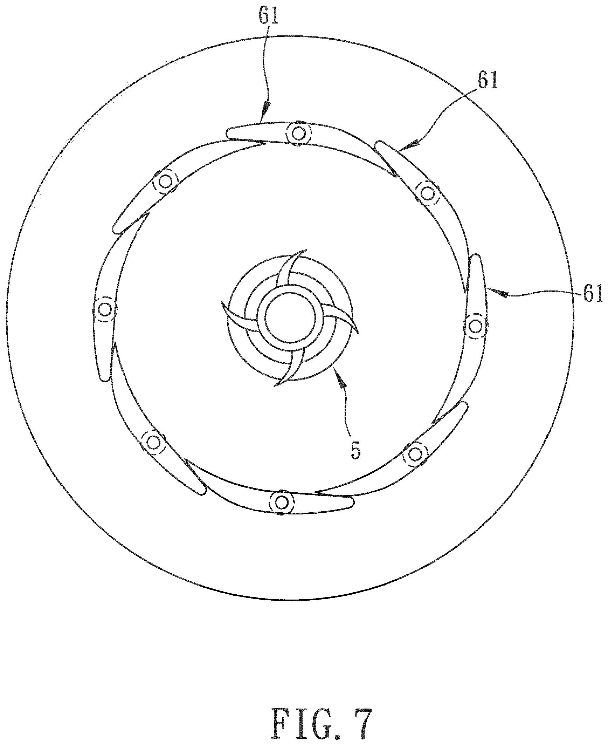

Additionally, referring to FIG. 7, the wind-collecting plates 61 can be arranged circumferentially around the blade unit 5 when tornado or typhoon occurs so as to prohibit wind from flowing toward the blade unit 5. Thus, the blade unit 5 and the generator 9 are protected from damage, and the service life of the apparatus 3 can be prolonged.

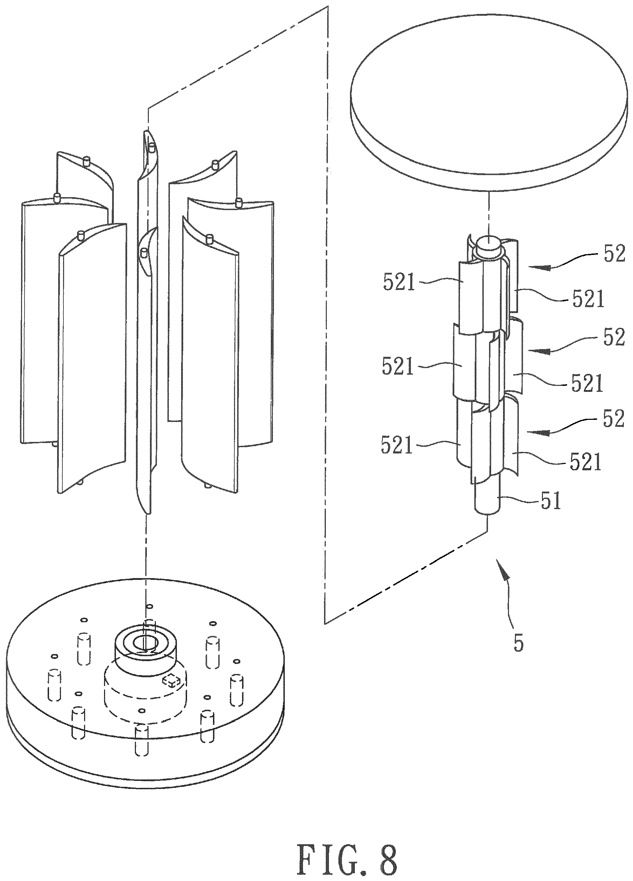

As shown in FIG. 8, a second preferred embodiment of the apparatus 3 according to the present invention has a structure similar to that of the first embodiment. The main difference between the second embodiment and the first embodiment resides in that the blade unit 5 includes a plurality of the blade members 52 arranged axially along the upright shaft 51 in the second embodiment. The blades 521 of each of the blade members 52 are misaligned respectively from those of an adjacent one of the blade members 52 along the pivot axis (A).

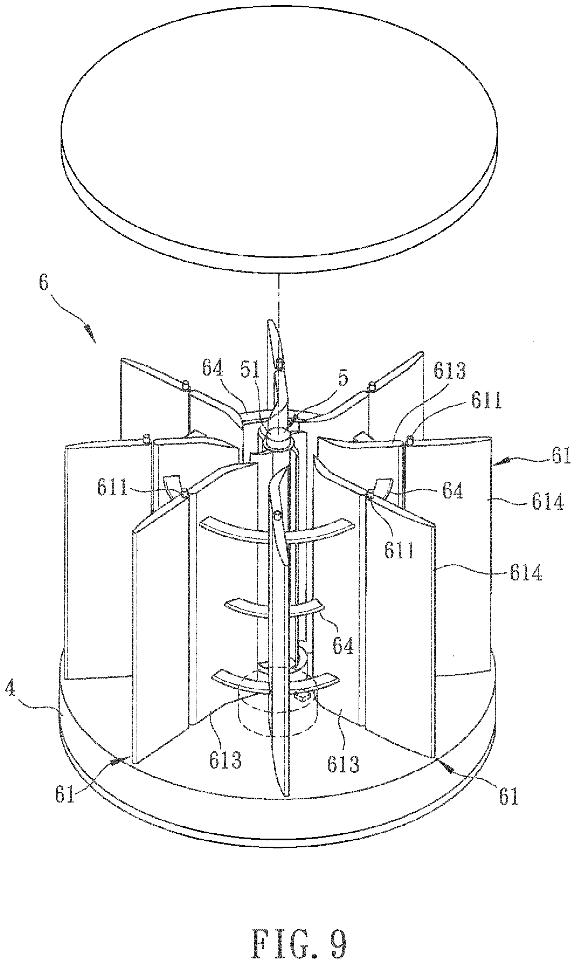

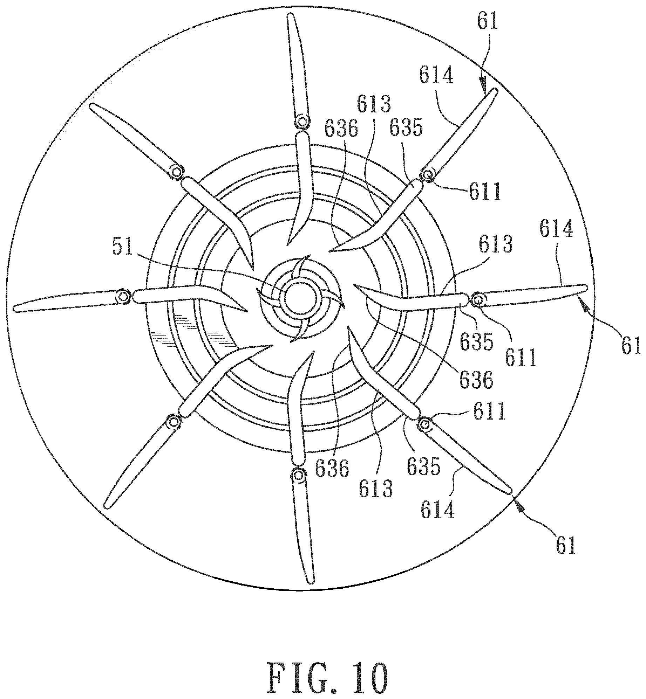

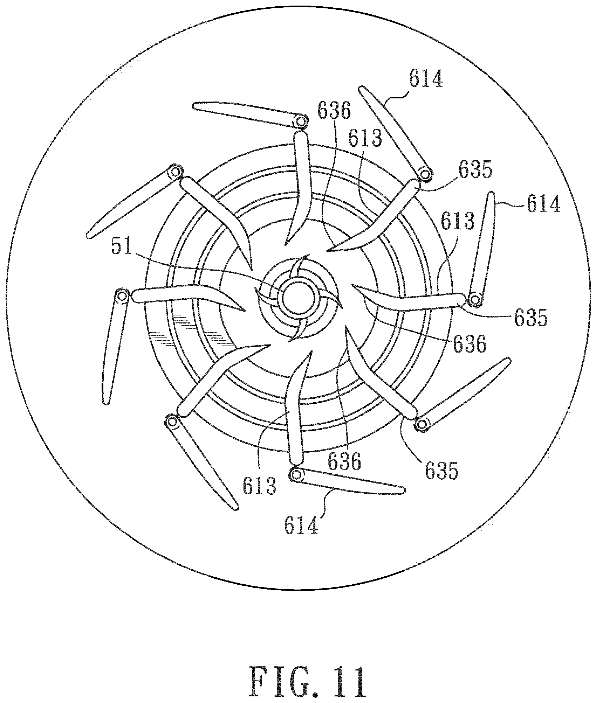

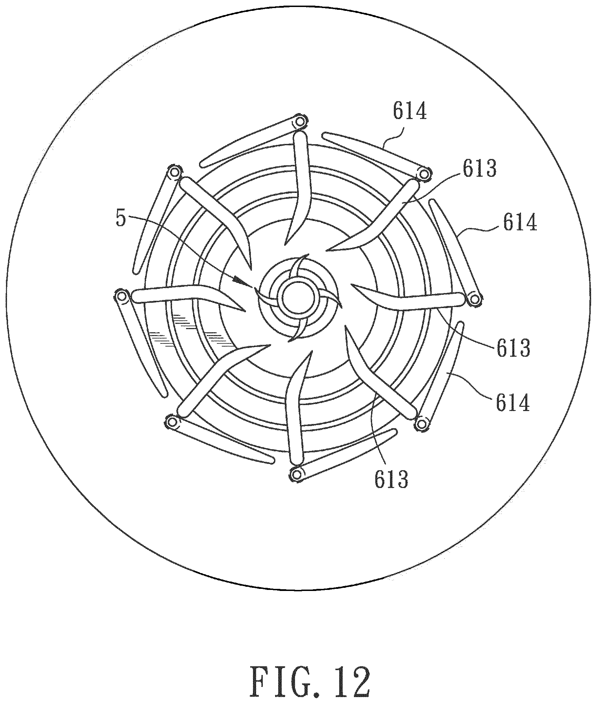

Referring to FIGS. 9 to 12, a third preferred embodiment of the present invention is shown. In this embodiment, the first guiding segment 613 of each wind-collecting plate 61 is fixedly disposed adjacent to and points toward the upright shaft 51 of the blade unit 5, and the second guiding segment 614 of each wind-collecting plate 61 is mounted pivotally to the base 4 through the driving shaft 611 of the corresponding wind-collecting plate 61 and is rotated by the driving shaft 611 to move between the first position (see FIG. 10) and the second position (see FIG. 11). Each first guiding segment 613 has a first end 636 pointing toward the upright shaft 51 and a second end 635 opposite to the first end 636 and adj acent to the corresponding second guiding segment 614. The wind-collecting unit 6 further includes a plurality of reinforcing members 64 each interconnecting the first guiding segments 613 of adjacent two of the wind-collecting plates 61, thus enhancing structural strength of the first guiding segments 613 of the wind-collecting plates 61. Additionally, referring to FIG. 12, the second guiding segments 614 can be arranged to circumferentially surround the first guiding segments 613 and the blade unit 5 when tornado or typhoon occurs.

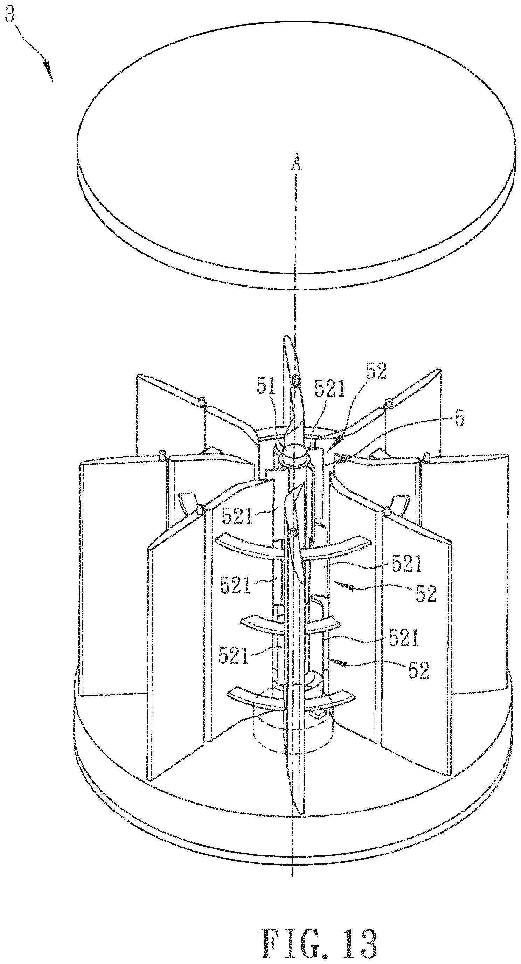

As shown in FIG. 13, a fourth preferred embodiment of the apparatus 3 according to the present invention has a structure similar to that of the third embodiment. The main difference between the fourth embodiment and the third embodiment resides in that the blade unit 5 includes a plurality of the blade members 52 arranged axially along the upright shaft 51 in this embodiment. The blades 521 of each of the blade members 52 are misaligned respectively from those of an adjacent one of the blade members 52 along the pivot axis (A).

To sum up, due to the presence of the control unit 8, at least a portion of each wind-collecting plate 61 can be moved between the first and second positions by the drivers 82 as required according to the rotational speed of the upright shaft 51 detected by the detector 81. Consequently, the apparatus 3 of the present invention is capable of preventing damage of the blade unit 5 and the generator 9 as well as providing an effective way of generating electric power from wind energy.

## Claims

1. An apparatus for generating electric power from wind energy comprising:
a base (4);
a blade unit (5) including an upright shaft (51) that extends axially along a pivot axis (A) and that is mounted rotatably on said base (4), and at least one blade member (52) that has a plurality of blades (521) connected fixedly around said upright shaft (51) and driven by wind to rotate about the pivot axis (A) for converting wind energy into rotational kinetic energy; and
a generator (9) connected to said upright shaft (51) of said blade unit (5) for converting the rotational kinetic energy into electric power;
a wind-collecting unit (6) including a plurality of wind-collecting plates (61) that are mounted pivotally on said base (4) and that are disposed around said blades (521) of said blade member (52) with angular equidistance; and
a control unit (8) including a detector (81) for detecting rotational speed of said upright shaft (51) of said blade unit (5) and for generating a control signal according to the rotational speed, and at least one driver (82) coupled to said detector (81) for receiving the control signal therefrom and responsive to the control signal for moving at least a portion of each of said wind-collecting plates (61) between a first position, where any adjacent two of said wind-collecting plates (61) define a wind guiding channel(62)therebetween that has a wind inlet (621)and a wind outlet (622)facing said upright shaft, and that converges from said wind inlet (621) toward said wind outlet (622)so as to collect the wind to flow directly toward said blades (521), and a second position, where said wind outlet (622)has a dimension not smaller than a dimension of said wind inlet (621)so as to reduce an amount of the wind flowing toward said blades(51);
**characterized in that**
each of said wind-collecting plates (61) includes:
a first guiding segment (613) fixedly disposed adjacent to and tapered toward said upright shaft (51) of said blade unit (5),
a second guiding segment (614) disposed adjacent to and pivotable with respect to said first guiding segment (613), and
a driving shaft (611) extending in an axial direction parallel to the pivot axis, mounting said second guiding segment (614) pivotally to said base (4), and being rotated by said driver (82) so as to move said second guiding segment (614) between the first and second positions.

2. The apparatus as claimed in Claim 1, further **characterized in that** said blade unit (5)includes a plurality of said blade members (52) arranged axially along said upright shaft (51), said blades (521) of each of said blade members (52) being misaligned respectively from those of an adjacent one of said blade members (52) along the pivot axis (A).

3. The apparatus as claimed in Claim 2, further **characterized by** a top wall (7) disposed over said upright shaft (51) and said driving shafts (611) and covering said blade unit (5) and said wind-collecting unit (6), said upright shaft (51) and said driving shafts (611) being rotatably mounted between said top wall (7) and said base (2).

4. The apparatus as claimed in any of Claims 2-3, further **characterized in that** said first guiding segments (613) of adjacent two of said wind-collecting plates (61) define said wind outlet (622) therebetween, and said second guiding segments (614) of adjacent two of said wind-collecting plates (61) define said wind inlet (621) therebetween.

5. The apparatus as claimed in any of Claims 1-4, further **characterized in that** said wind-collecting unit (6) further includes a plurality of reinforcing members (64) each interconnecting said first guiding segments (613) of adjacent two of said wind-collecting plates (611).

6. The apparatus as claimed in Claim 5, further **characterized by** a top wall (7) disposed over said upright shaft (51) and said driving shafts (611) and covering said blade unit (5) and said wind-collecting unit (6), said upright shaft (51) and said driving shafts (611) being rotatably mounted between said top wall (7) and said base (2).

7. The apparatus as claimed in Claim 6, further **characterized in that** said blade unit (5) includes a plurality of said blade members (52) arranged axially along said upright shaft (51), said blades (521) of each of said blade members (52) being misaligned respectively from those of an adjacent one of said blade members (52) along the pivot axis (A).

8. The apparatus as claimed in any of Claims 1-7, further **characterized in that** said first guiding segments (613) of adjacent two of said wind-collecting plates (61) define said wind outlet (622) therebetween, and said second guiding segments (614) of adjacent two of said wind-collecting plates (61) define said wind inlet (621) therebetween.

## Patentansprüche

1. Apparatur zur Erzeugung von elektrischer Energie aus Windenergie, umfassend:
eine Basis (4),
eine Flügeleinheit (5), die einen aufrechten Schaft (51), der sich axial entlang einer Drehachse (A) erstreckt und rotierbar an der Basis (4) montiert ist, und mindestens ein Flügelelement (52) beinhaltet, das eine Vielzahl von Flügeln (521) aufweist, die fest um den aufrechten Schaft (51) herum befestigt sind und durch Wind zur Rotation um die Drehachse (A) angetrieben werden, um Windenergie in kinetische Rotationsenergie umzuwandeln, und
einen Generator (9), der an dem aufrechten Schaft (51) der Flügeleinheit (5) zur Umwandlung der kinetischen Rotationsenergie in elektrische Energie befestigt ist,
eine Windkollektoreinheit (6), die eine Vielzahl von Windkollektorplatten (61) beinhaltet, die schwenkbar an der Basis (4) montiert sind und die um die Flügel (521) des Flügefelements (52) mit identischem Winkelabstand zueinander angeordnet sind, und
eine Steuereinheit (8), die einen Detektor (81), der zur Detektion der Rotationsgeschwindigkeit des aufrechten Schafts (51) der Flügeleinheit (5) und zum Erzeugen eines Steuersignals gemäß der Rotationsgeschwindigkeit dient, und
mindestens einen Treiber (82) beinhaltet, der mit dem Detektor (81) verbunden ist und zum Empfang des Kontrollsignals von diesem dient und auf das Kontrollsignal antwortet, um mindestens eines Teils einer jeden Windkollektorplatte (61) zwischen einer ersten Position, in der zwei benachbarte der Windkollektorplatten (61) zwischen sich einen Windführungskanal (62) bilden, der einen Windeinlass (621) und einen Windauslass (622) aufweist, der dem aufrechten Schaft zugewandt ist, und der sich von dem Windeinlass (621) in Richtung des Windauslasses (622) verjüngt, um so den Wind zu sammeln und zu veranlassen, direkt in Richtung der Flügel (521) zu strömen, und einer zweiten Position zu bewegen, in der der Windauslass (622) eine Größe aufweist, die nicht kleiner als eine Dimension des Windeinlasses (621) ist, umso die Menge des Windes, der in Richtung der Flügel (51) strömt zu reduzieren,
**dadurch gekennzeichnet, dass**
jede der Windkollektorplatten (61) umfasst:
ein erstes Führungssegment (613), das fest benachbart zu dem aufrechten Schaft (51) der Flügeleinheit (5) angeordnet ist und sich in dessen Richtung verjüngt,
ein zweites Führungssegment (614), das benachbart zu dem ersten Führungssegment (613) und relativ zu diesem schwenkbar angeordnet ist, und
eine Antriebswelle (611), die sich in axialer Richtung parallel zu der Rotationsachse erstreckt, die das zweite Führungssegment (614) schwenkbar an der Basis (4) montiert, und die durch den Treiber (82) rotierbar ist, um so das zweite Führungssegment (614) zwischen der ersten und der zweiten Position zu bewegen.

2. Apparatur nach Anspruch 1, ferner **dadurch gekennzeichnet, dass** die Flügeleinheit (5) eine Vielzahl von den Flügelelementen (52) beinhaltet, die axial entlang dem aufrechten Schaft (51) angeordnet sind, wobei die Flügel (521) eines jeden der Flügelelemente (52) entsprechend nicht zu denen eines Benachbarten der Flügelelemente (52) entlang der Schwenkachse (A) ausgerichtet sind.

3. Apparatur nach Anspruch 2, ferner **dadurch gekennzeichnet, dass** eine obere Wand (7) über dem aufrechten Schaft (51) und den Antriebswellen (611) angeordnet ist und die Flügeleinheit (5) und die Windkollektoreinheit (6) abdeckt, wobei der aufrechte Schaft (51) und die Antriebswellen (611) zwischen der oberen Wand (7) und der Basis (2) rotierbar montiert sind.

4. Apparatur nach einem der Ansprüche 2 bis 3, ferner **dadurch gekennzeichnet, dass** die ersten Führungssegmente (613) von zwei Benachbarten der Windkollektorplatten (61) den Windauslass (622) zwischen sich definieren, und dass die zweiten Führungssegmente (614) von zwei Benachbarten der Windkollektorplatten (61) zwischen sich den besagten Windeinlass (621) definieren.

5. Apparatur nach einem der Ansprüche 1 bis 4, ferner **dadurch gekennzeichnet, dass** die Windkollektoreinheit (6) ferner eine Vielzahl von Verstärkungselementen (64) beinhaltet, wobei jedes die ersten Führungssegmente (613) von zwei Benachbarten der Windkollektorplatten (611) miteinander verbindet.

6. Apparatur nach Anspruch 5, ferner **dadurch gekennzeichnet, dass** eine obere Wand (7) über dem aufrechten Schaft (51) und den Antriebswellen (611) angeordnet ist und die Flügeleinheit (5) und die Windkollektoreinheit (6) abdeckt, wobei der aufrechte Schaft (51) und die Antriebswellen (611) zwischen der oberen Wand (7) und der Basis (2) rotierbar montiert sind.

7. Apparatur nach Anspruch 6, ferner **dadurch gekennzeichnet, dass** die Flügeleinheit (5) eine Vielzahl von den Flügelelementen (52) beinhaltet, die axial entlang dem aufrechten Schaft (51) angeordnet sind, wobei die Flügel (521) eines jeden der Flügelelemente (52) entsprechend nicht zu denen eines Benachbarten der Flügelelemente (52) entlang der Rotationsachse (A) ausgerichtet sind.

8. Apparatur nach einem der Ansprüche 1 bis 7, ferner **dadurch gekennzeichnet, dass** die ersten Führungssegmente (613) von zwei Benachbarten der Windkollektorplatten (61) zwischen sich den Windauslass (622) definieren, und dass die zweiten Führungssegmente (614) von zwei Benachbarten der Windkollektorplatten (61) zwischen sich den Windeinlass (621) definieren.

## Revendications

1. Appareil pour générer une puissance électrique à partir d'une énergie éolienne, comprenant:
une base (4),
une unité de pales (5) comprenant un arbre vertical (51) qui s'étend axialement le long d'un axe de pivot (A) et qui est montée, de manière à pouvoir tourner, sur ladite base (4), et au moins un organe de pales (52) comportant une pluralité de pales (521) raccordées fixement autour dudit arbre vertical (51) et entraînées par le vent pour tourner autour de l'axe de pivot (A) afin de convertir une énergie éolienne en énergie cinétique rotationnelle et un générateur (9) raccordé au dit arbre vertical (51) de ladite unité de pales (5) pour convertir l'énergie cinétique rotationnelle en puissance électrique,
une unité de collecte éolienne (6) comprenant une pluralité de plaques de collecte éolienne (61) qui sont montées, de manière à pouvoir pivoter, sur ladite base (4) et qui sont disposées autour desdites pales (521) dudit organe de pales (52) en équidistance angulaire et
une unité de commande (8) comprenant un détecteur (81) pour détecter une vitesse rotationnelle dudit arbre vertical (51) de ladite unité de pales (5) et pour générer un signal de commande en fonction de la vitesse rotationnelle, et au moins un circuit d'attaque (82) couplé au dit détecteur (81) pour recevoir le signal de commande en provenance de celui-ci et, en réponse au signal de commande, déplacer au moins une portion de chacune desdites plaques de collecte éolienne (61) entre une première position, à laquelle deux plaques adjacentes parmi lesdites plaques de collecte éolienne (61) définissent un canal de guidage éolien (62) entre elles qui comporte une entrée éolienne (621) et une sortie éolienne (622) faisant face au dit arbre vertical, et qui converge de ladite entrée éolienne (621) vers ladite sortie éolienne (622) de manière à collecter le vent pour qu'il s'écoule directement vers lesdites pales (521), et une deuxième position, à laquelle ladite sortie éolienne (622) présente une dimension supérieure ou égale à une dimension de ladite entrée éolienne (621) de manière à réduire une quantité du vent s'écoulant vers lesdites pales (51),
**caractérisé en ce que**
chacune desdites plaques de collecte éolienne (61) comprend :
un premier segment de guidage (613) fixement disposé adjacent au dit arbre vertical (51) de ladite unité de pales (5) et effilé vers celui-ci,
un deuxième segment de guidage (614) disposé adjacent de manière à pouvoir pivoter par rapport au dit premier segment de guidage (613), et
un arbre d'entraînement (611) s'étendant dans un sens axial parallèle à l'axe de pivot, montant ledit deuxième segment de guidage (614), de manière à pouvoir pivoter, sur ladite base (4), et étant tourné par ledit circuit d'attaque (82) de manière à déplacer ledit deuxième segment de guidage (614) entre la première position et la deuxième position.

2. Appareil selon la revendication 1, **caractérisé en outre en ce que** ladite unité de pales (5) comprend une pluralité desdits organes de pales (52) agencés axialement le long dudit arbre vertical (51), lesdites pales (521) de chacun desdits organes de pales (52) n'étant pas alignées respectivement avec celles de l'un adjacent desdits organes de pales (52) le long de l'axe de pivot (A).

3. Appareil selon la revendication 2, **caractérisé en outre par** une paroi supérieure (7) disposée sur ledit arbre vertical (51) et lesdits arbres d'entraînement (611) et recouvrant ladite unité de pales (5) et ladite unité de collecte éolienne (6), ledit arbre vertical (51) et lesdits arbres d'entraînement (611) étant montés, de manière à pouvoir tourner, entre ladite paroi supérieure (7) et ladite base (2).

4. Appareil selon l'une quelconque des revendications 2 et 3, **caractérisé en outre en ce que** lesdits premiers segments de guidage (613) de deux plaques adjacentes parmi lesdites plaques de collecte éolienne (61) définissent ladite sortie éolienne (622) entre elles, et lesdits deuxièmes segments de guidage (614) de deux plaques adjacentes parmi lesdites plaques de collecte éolienne (61) définissent ladite entrée éolienne (621) entre elles.

5. Appareil selon l'une quelconque des revendications 1 à 4, **caractérisé en outre en ce que** ladite unité de collecte éolienne (6) comprend en outre une pluralité d'organes de renforcement (64), chacun d'eux interconnectant lesdits premiers segments de guidage (613) de deux plaques adjacentes parmi lesdites plaques de collecte éolienne (611).

6. Appareil selon la revendication 5, **caractérisé en outre par** une paroi supérieure (7) disposée sur ledit arbre vertical (51) et lesdits arbres d'entraînement (611) et recouvrant ladite unité de pales (5) et ladite unité de collecte éolienne (6), ledit arbre vertical (51) et lesdits arbres d'entraînement (611) étant montés, de manière à pouvoir tourner, entre ladite paroi supérieure (7) et ladite base (2).

7. Appareil selon la revendication 6, **caractérisé en outre en ce que** ladite unité de pales (5) comprend une pluralité desdits organes de pales (52) agencés axialement le long dudit arbre vertical (51), lesdites pales (521) de chacun desdits organes de pales (52) n'étant pas alignées respectivement avec celles de l'un adjacent desdits organes de pales (52) le long de l'axe de pivot (A).

8. Appareil selon l'une quelconque des revendications 1 à 7, **caractérisé en outre en ce que** lesdits premiers segments de guidage (613) de deux plaques adjacentes parmi lesdites plaques de collecte éolienne (61) définissent ladite sortie éolienne (622) entre elles, et lesdits deuxièmes segments de guidage (614) de deux plaques adjacentes parmi lesdites plaques de collecte éolienne (61) définissent ladite entrée éolienne (621) entre elles.
